# EUROPEAN PATENT APPLICATION

(11) **EP 3 023 756 A1**
(43) Date of publication of application: **25.05.2016**
(21) Application number: 14194520.4
(22) Date of filing: 24.11.2014
(51) Int. Cl.: G01J 3/02, G01J 3/28, G01J 3/453, G02B 26/10

(54) **Oscillating reflector with ultrasonic resonator, interferometer with an oscillating reflector and Fourier transform infrared spectrometer**

(71) Applicant: Freie Universität Berlin, 14195 Berlin (DE)
(72) Inventor: Süß, Björn, 12051 Berlin (DE)
(74) Representative: Gulde & Partner

(57) **Abstract**

The present invention provides a reflector (1) adapted to oscillate comprising a resonator (10), an energy beam reflecting surface (20), and a means for inducing oscillations in the resonator (10). The reflecting surface (20) of the reflector (1) adapted to oscillate is provided by a surface of the oscillating resonator (10) itself. Furthermore, an interferometer (100) with a reflector (1) adapted to oscillate according to the invention is provided as well as an infrared Fourier transform spectrometer (200) with an interferometer (100) according to the invention.

## Description

The invention relates to a reflector adapted to oscillate, an interferometer employing the reflector adapted to oscillate, and a Fourier transform spectrometer with an inventive interferometer.

### Background of the invention

Oscillating reflectors or mirrors are needed for different applications, like interferometers, and Fourier transform spectrometers, among others. Usually, oscillating reflectors are used to create a varying optical path length of an energy beam impinging on the reflector, as for instance used in interferometers in order to get access to phase information.

Among others, oscillating reflectors are used in infrared (IR) spectroscopy. IR spectroscopy is an extremely powerful tool for the identification and characterization of molecules. It is based on the principle of the measurement of IR absorption or emission bands, which arise by an excitation of molecular vibrations of a sample. Advantageously, IR spectroscopy is a non-destructive method which provides a high degree of information about the sample, like molecular identification, configuration analysis, analysis of the chemical environment of molecules, and a temporal analysis of chemical processes.

Time-resolved measurements are of interest for kinetic processes, for example, in the investigation of combustion reactions or in biochemical reactions. The so-called FTIR spectroscopy is an extension of the IR spectroscopy. Here, a reference beam with a constant optical path interferes with a beam whose optical path length is varied by means of a planar, oscillating reflector or mirror. This structure, in which two beams with different optical path length with respect to a beam source are superimposed, is called an interferometer. In an interferometer, a sample is provided in the interference beam. An IR spectrum can be extracted from the interferogram by Fourier transformation. Compared to dispersive IR spectroscopy, this method allows a higher spectral accuracy (Connes advantage) and a better signal-to-noise ratio (Jacquinot and multiplex advantage).

The methods for time-resolved IR spectroscopy can be divided into interferometer based methods like rapid scan, step scan or stroboscopic sampling, and non interferometric, dispersive or laser based methods.

Rapid scan is a standard mode of FTIR spectroscopy. Rapid scan provides a simple measurement setup and is low error prone. It requires a movable mirror or reflector, which is moved back and forth with respect to an incident light beam thereon. During this periodic movement, the intensity is continuously measured. Rapid scan provides a time resolution of the order of 10⁻² s.

An interferogram-based method by which a higher time resolution than rapid scan can be achieved is for example step scan. In step scan, a movable mirror is held at a certain position and the variation in time of the intensity is measured. This measurement is repeated for many different positions. The time resolution of step scan is of the order of nanoseconds depending on the rise time of the detector and the employed electronics. Step scan requires extremely good stability of the entire structure and reproducibility of the measurement and no significant change in the sample over time. Otherwise, errors are introduced which cannot be detected or corrected. However, these requirements are often not met in practice, especially in biological kinetic processes.

Further known are stroboscopic measurements. In stroboscopic measurements, the mirror is moved as in rapid scan, but interferograms are measured with different time offset relative to the start of the reaction. Individual points of these shifted interferograms are assembled in retrospect such that the resulting spectrum has a higher time resolution than the period of oscillation of the movable mirror. This mode of measurement requires analogous to step scan extremely good stability and reproducibility and is therefore also impractical in practice in many cases.

In general, the conventional rapid scanning technique provides many advantages over other methods, like sensibility to changes in the environment, excitation source or sample. It is also more cost-effective and relatively "easy". A particular advantage of this method is that each sample leads to an entire interferogram. The Fourier transform is obtained from data points, which originate from the same sample. However, a disadvantage of the rapid-scan method is its limited time resolution. Specifically, the period of the oscillating movement of the mirror is a limiting factor.

Typically, the translation of the movable mirror or reflector is formed by an oscillator coil, which acts on the mirror or reflector. However, with this method, the maximum mirror speeds are however limited to values of around 6 cm/s. The reason for this is the extremely high forces necessary to accelerate the mirror. These forces increase exponentially as a function of the mirror velocity. This makes it impossible to accelerate the mirror in a sufficient way.

In the past there have been various approaches to circumvent this problem by faster mirror movements to achieve ultra rapid-scan spectrometry. It is for instance known to convert the translation movement of the mirror into a rotary movement, wherein the movement direction of the mirror does not have to be continuously reversed, so that extremely high forces can be avoided.

Instead, a disc-shaped mirror whose surface has a slight tilt is rotated. Thus, the optical path difference can be quickly varied cyclically. With this system, a time resolution could be realized up to a few milliseconds. However, in this time range frictional forces and demands on the minimization of the imbalance reach a critical level.

Therefore, there is still the need to provide oscillating reflectors or mirrors which can move quickly.

### Summary of the invention

The object of the present invention is to provide an alternative, quickly moving oscillating reflector. It is a further object of the invention to provide a FTIR spectrometer with improved time and spectral resolution.
According to the invention, this object is achieved by providing a reflector adapted to oscillate comprising a resonator, an energy beam reflecting surface, and a means for inducing oscillations of or in the resonator. The reflecting surface is provided by a surface of the resonator itself.

In contrast to state of the art movable mirrors where an oscillating unit is used to drive a separate mirror, here a surface of an oscillating unit, the resonator itself is used as a reflecting surface. In contrast to separate mirrors, the surface of the resonator itself is built to withstand the forces resulting from the rapid movement of the resonator in resonance. The inventive movable mirror allows achieving higher frequency of oscillations and thus a better time resolution when used in interferometers and spectrometers.

The reflected energy beam may be a polychromatic or monochromatic beam.

The reflecting surface is preferably an outer surface of the resonator. The outer surface is preferably provided in the longitudinal direction of the resonator and the resonator oscillates in longitudinally mode. In transversal mode, due to flexing of the resonator itself, an outer resonator surface can not be directly used for reflection due to its transversal deformation. The flexing of the resonator in transversal mode is proportional to the amplitude of oscillation. A separate reflecting surface needs to be mounted to the resonator. The fixation of the separate reflecting surface leads to a significant decrement of the resonant frequency and the amplitude of the oscillation which can't be compensated. This leads to a significant decrement of the time resolution and spectral resolution. Further, if the resonator is an ultrasonic resonator, a booster can not be used in transversal mode in contrast to longitudinal mode, which in comparison leads to an additional lowering of the oscillation amplitude and spectral resolution.

The reflecting surface is preferably a lapped or polished or flattened outer surface of the resonator. This provides a better reflection of the reflector surface. In one embodiment, to further improve the reflection, the reflecting surface of the resonator is provided with a reflecting layer coated or evaporated thereon. In an embodiment, a foil is fixed to an outer surface of the reflecting surface to improve the reflection.

The reflecting surface of the resonator is preferably of a circular shape or form.

The resonator is preferably a resonator of cylindrical shape having a length of an integer of half the resonance wavelength.

The resonator may be an ultrasonic resonator, preferably oscillating in resonance. The ultrasonic resonator is in one embodiment a sonotrode, preferably a titanium sonotrode, steel, aluminium, glass or silicon sonotrode.

The resonator may have a resonance frequency above 10.000 kHz, preferably above 15.000 kHz, even more preferably above 18.000 kHz.

A cooling device may be optionally provided to cool the resonator. The cooling of the resonator or the reflecting surface of the resonator leads to an improved amplitude distribution and allows a higher amplitude of oscillation of the reflecting surface.

Further provided is an interferometer comprising a source of a primary energy beam, a first reflector being provided static such that a first path length from the source to the first reflector is constant, and a reflector according to the invention adapted and provided to oscillate such that a second path length from the source to the reflecting surface is variable. Further provided is a target, a means for splitting an energy beam arranged such that it divides the primary beam into a first energy beam incident onto the first reflector, and a second energy beam incident onto the reflector adapted to oscillate, and a means for combining energy beams arranged such that it combines a third energy beam reflected from the first reflector and a fourth energy beam reflected from the reflector (1) adapted to oscillate to a fifth energy beam incident onto the target.

The primary energy beam may be a polychromatic or monochromatic energy beam.

The inventive reflector is adapted to oscillate with respect to the direction of the second energy beam incident thereon.

Further provided is a Fourier transform spectrometer with an inventive interferometer wherein the first reflector is a flat mirror, the means for splitting and the means for combining are provided by a beam splitter, and the target is a detector. The source of a primary beam in the Fourier transform spectrometer may be an infrared light source or a polychromatic light source.

To conclude, the use of a surface of a resonator, preferably an ultrasonic resonator as an oscillating reflector improves the time resolution significantly, exemplarily in one embodiment to a range of 13 to 26 µs and a spectral resolution of up to 4.5-9 cm⁻¹.

The use of the ultrasonic resonator as an oscillating reflector provides a solution, in which a surface can swing very fast and reliable. The presented ultra rapid scan spectrometer surpasses all previous approaches to increase the time resolution of the rapid-scan method and offers in this respect to current commercial devices by a factor of 1000. For instance, FTIR measurements in rapid scan thus become applicable for a much greater time range of fast kinetic processes. This makes IR spectroscopy applicable to completely new processes. The measurement is greatly simplified and improved in quality.

### Brief description of the drawings

The characteristics, features and advantages of this invention and the manner in which they are obtained as described above, will become more apparent and be more clearly understood in connection with the following description of exemplary embodiments, which are explained in connection with the drawings. In the drawings:
- Fig. 1: a reflector adapted to oscillate according to the invention,
- Fig. 2: a resonator employed in the invention,
- Fig. 3: a first embodiment of an interferometer with a reflector adapted to oscillate according to the invention,
- Fig. 4: a second embodiment of an interferometer with a reflector adapted to oscillate according to the invention,
- Fig. 5: a third embodiment of a part of an interferometer with a reflector adapted to oscillate according to the invention,
- Fig. 6: an inventive Fourier transform spectrometer according to a first embodiment of the invention,
- Fig. 7: a simultaneous measurement of an Helium-Neon laser and the interferogram of an polychromatic infrared light source in a rapid scan Fourier transform spectrometer,
- Fig. 8: an absorbance difference spectra of the integral membrane protein bacteriorhodopsin (BR) before and after light excitation, and
- Fig. 9: time course of the absorbance band changes at 1526 wavenumbers, corresponding to the C=C oscillation of the bacteriorhodopsin retinal, after light excitation.

### Detailed description of the drawings

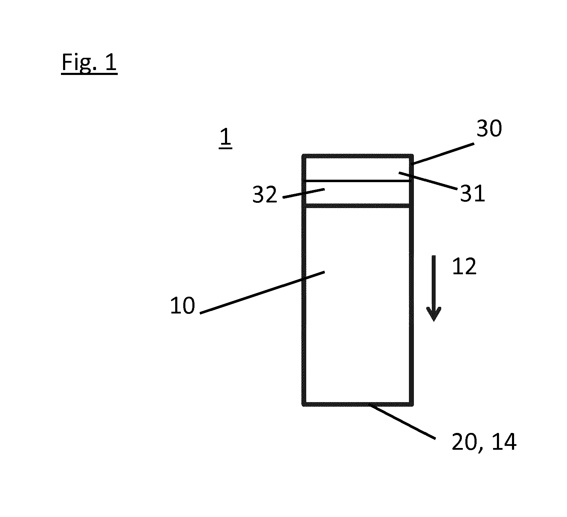

Figure 1 shows a reflector in an embodiment of the invention. The reflector 1 is adapted to oscillate. The reflector 1 comprises a resonator 10, an energy beam reflecting surface 20, and a means for inducing oscillations in the resonator 30. The reflecting surface 20 of the inventive reflector 1 is provided by a surface of the resonator 10 itself. In other words, in active mode of the inventive reflector 1, the resonator 10 oscillates and thus its outer surfaces oscillate. One surface of the reflector 1 is then used as the reflecting surface 20 of the reflector 1 and is adapted to reflect an impinging energy beam, preferably light. Thus, in active mode the inventive reflector 1 is a moving reflector with its reflecting surface 20 oscillating. This allows the use of the inventive reflector 1 in interferometry. In interferometry, a primary beam is split up into a first beam with a constant optical path length and a second beam with a variable optical path length. Both beams are superimposed after traversal of their optical paths resulting in interference of the two beams due to the difference in their optical path lengths. Here, the inventive reflector 1 can be used for the optical path with variable path length. However, applications of the inventive reflector 1 are not limited to interferometry but to all applications were a moving or oscillating reflecting surface 20 is required.

The use of a surface of a resonator 10 as a moving, reflecting surface 20 of a reflector 1 has the advantage that very high oscillation frequencies in the range of kHz can be achieved while it is only necessary to provide sufficient energy to compensate for oscillation losses.

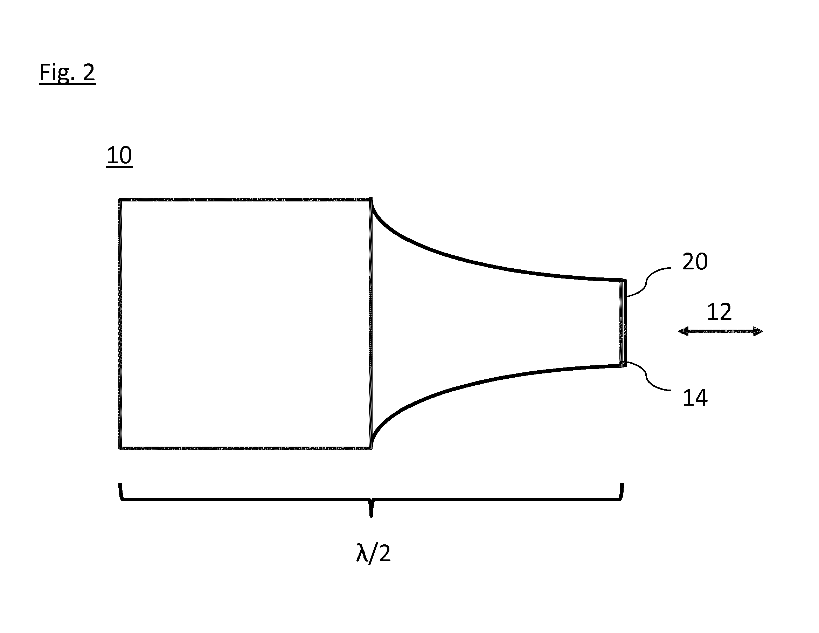

In active mode of the inventive reflector 1, i.e. when the reflector 1 is oscillating, the means 30 for inducing oscillations in the resonator 10 is switched on and induces oscillations in the resonator 10. The means 30 for inducing oscillations of the resonator 10 is in a preferred but not limiting embodiment comprises a power supply unit 31 and piezoelectric transducers 32 connected to the power supply 31 for inducing oscillations of or in the resonator 10. In one exemplarily and not limiting embodiment, the power supply unit 31, the piezoelectric transducers 32 and the resonator 10 are part of a so-called sonotrode. In a sonotrode, the resonator 10 is a tapering metal rod as shown in Fig. 2. The power unit supply 31 applies alternating current oscillations at ultrasonic frequency to the piezoelectric transducers 32. The current causes expansion or contraction of the transducers. The frequency of the current is chosen to be equivalent to the resonant frequency of the resonator 10. The entire metal rod of the sonotrode acts as a half-wavelength resonator, vibrating longitudinally or lengthwise with standing waves in resonant frequency. The frequencies of a sonotrode range from 20 kHz to 70 kHz with amplitudes of vibrations ranging between 10-300 µm. The resonator 10 of a sonotrode can be made of titanium, aluminium, steel or glass. A resonator 10 of a sonotrode can have different shapes, like cylindrical, square, or profiled etc. The resonator 10 preferably has a cylindrical symmetry.

Sometimes, only the resonator 10 is called a "sonotrode" and the power supply unit 31 and the piezoelectric transducers 32 are accordingly separate elements of the sonotrode. The invention also covers these embodiments.

Moreover, other resonators 10 can be used for the inventive reflector 1.

Preferably, longitudinal resonance along the resonators length is used in the resonator 10. Transversal resonance results in smaller amplitudes of oscillations, requires more flexible resonators 10 and a separate friction less fixation of the resonator 10. Also, a resonator surface can not be directly used as a reflecting surface 20 due its transversal deformation. With smaller amplitudes, the spectral resolution in interferometry is disadvantageously degraded.

In an exemplary embodiment of the resonator 10 of a sonotrode as shown in Fig. 2, the resonator 10 has the form of a tapering metal rod. A sonotrode generally has a length of an integer of half the resonance wavelength, for instance λ/2 as shown in Fig. 2. The resonator 10 is swinging in its longitudinal direction 12 as shown in Fig. 2. A sonotrode may also comprise a booster mounted to the left side of the sonotrode in Fig. 2 and having a larger diameter than the sonotrode. Such boosters are known in the art and lead in combination with a sonotrode to an amplification of the amplitude of oscillation, e.g. with an amplification factor of 3. The reflecting surface 20 is the outer longitudinal surface of the resonator 10, being in Fig. 2 the end surface on the right of the resonator 10. The reflecting surface 20 may have a circular shape, for instance with a diameter of 20 mm. The diameter may vary, for instance between 15 mm to 50 mm. Exemplarily, with a resonant frequency of 20 kHz and a titanium resonator of a sonotrode, a 200 µm amplitude can be achieved. Its maximum velocity is approx. 45 km/h with a maximum acceleration of 160.000 g.

In a preferred embodiment as shown in Fig. 2, the reflecting surface 20 of the resonator 10 is optionally provided with a reflecting layer 14. The reflecting layer 14 may be coated or evaporated or otherwise deposited onto the resonator 10. The reflecting layer 14 may be a gold layer. However, it is also possible to lap or polish the outer surface of the resonator 10 to provide an improved reflecting behaviour of the reflecting surface 20.

In another embodiment, the reflector 1 is provided with a cooling device 40 not shown in the figures. The amplitude of oscillation within a reflecting surface 20 may vary depending on the position. For instance, the amplitude on the right side of the reflecting surface 20 of a resonator 10 may exhibit a higher amplitude than its left side. Since the speed of sound is temperature dependent, the cooling of the sonotrode by a cooling device 40 advantageously improves the amplitude distribution.

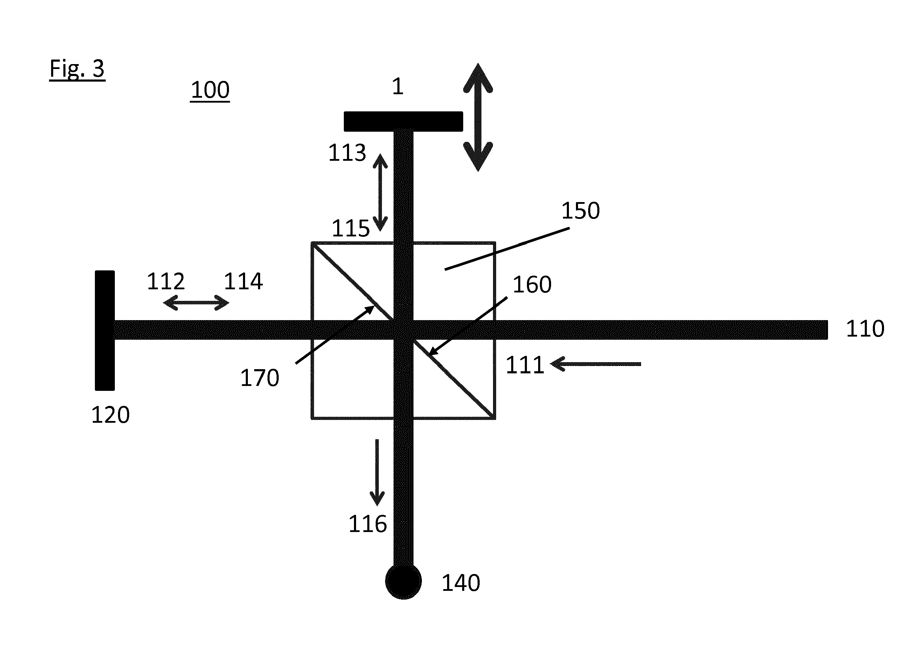

Fig. 3 shows an inventive interferometer 100 comprising the inventive reflector 1 adapted to oscillate as indicated by the large arrows in a variable length optical path and a static first reflector 120 in a constant length optical path. The energy beams reflected by the inventive reflector 1 and the first, static reflector 120 are re-combined and superimposed to exhibit interference at a target 140, which may be a sample or a detector connected to a sample or just a detector. Fig. 3 shows exemplarily a well-known Michelson interferometer. However, it is emphasized that any interferometer can be used were a variable length optical path is required to provide an interferogram.

In detail, the interferometer 100 of Fig. 3 exemplarily shows a source 110 of a primary energy beam 111, a first reflector 120 being provided static such that a first path length from the source 110 to the first reflector 120 is constant, and a reflector 1 according to the invention provided to oscillate such that a second path length from the source 110 to the reflecting surface 20 is variable. Further provided is a target in the optical paths from the static reflector 120 and the variable reflector 1 according to the invention. Further required are a means for splitting an energy beam 160 arranged such that it divides the primary beam 111 into a first energy beam 112 incident onto the first reflector 120, and a second energy beam 113 incident onto the reflector 1 adapted to oscillate, and a means for combining energy beams 170 arranged such that it combines a third energy beam 114 reflected from the first reflector 120 and a fourth energy beam 115 reflected from the reflector 1 adapted to oscillate incident onto the target 140. In a Michelson interferometer, a beam splitter 150 is used both as a means 160 for splitting the primary energy beam 111 and a means 170 for combining the reflected energy beams 115 and 114 onto the detector 140. The beam splitter 150 is partially reflective such that a part of the primary beam 111 is transmitted to the static first reflector 120 and another part is reflected to the inventive reflector 1 adapted to oscillate. In the reflected optical path, the fourth energy beam 115 from the inventive reflector 1 is transmitted to the detector 140 and the third energy beam 114 from the static reflector 120 is reflected to the detector 140 for interferential combination.

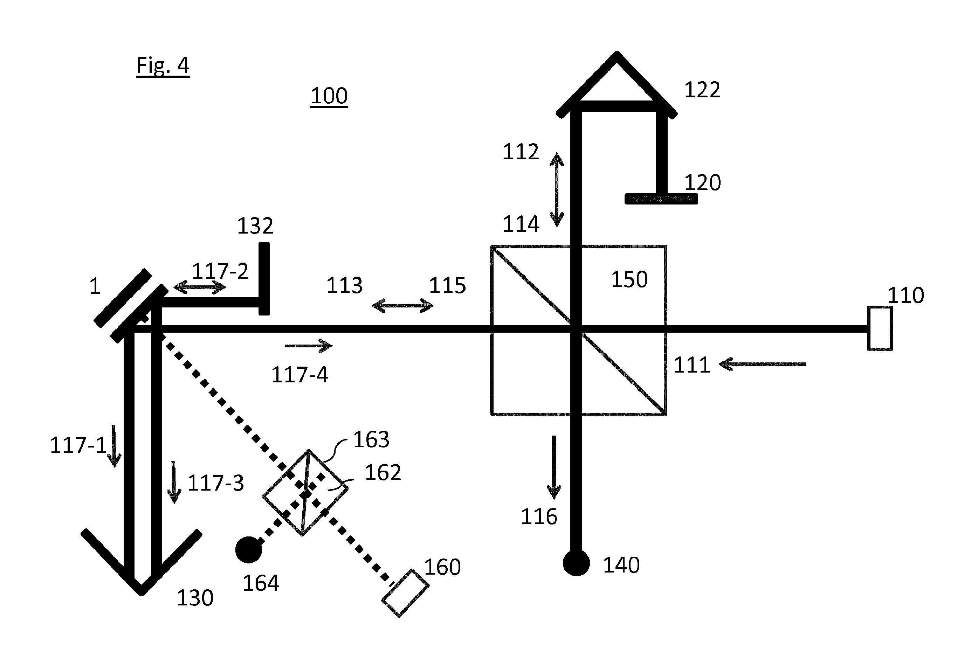

The inventive reflector 1 in the shown embodiment is thus adapted to oscillate with respect to the direction of the second energy beam 113 incident thereon. Preferably, the reflecting surface 20 of the reflector 1 is arranged perpendicular to the direction of the incident energy beam 113 and oscillates in direction of the incident energy beam 113. However, other configurations of the inventive reflector 1 with respect to the incident energy beam 113, such as a tilted arrangement with respect to the incident energy beam 113 are possible. An example will be discussed in connection with Fig. 4. The source of an energy beam 130 in Fig. 3 can be a monochromatic light source such as a laser, an infrared lamp or a polychromatic light source such as an infrared lamp.

However, the first reflector 120 may also be an object, which scatters the incident beam 112 thereon back to the means for combining 170. The source 110 of a primary beam 111 may be a polychromatic light source. The inventive reflector 1 adapted to oscillate would allow to receive phase information of each wavelength of the light emitted by the polychromatic light source. With one measurement, one would receive a three dimensional spectrum of the object and thus information about the three dimensional shape of the object. In an embodiment, if the object 120 is small lenses may be used to direct the beam 112 onto the object and the backscattered beam 114 back onto the means for combining 170 and also in the second beam path, onto the reflector adapted to oscillate 1.

Fig. 4 shows a second embodiment of an inventive interferometer 100 where the inventive reflector 1 is placed in the transmission path of the beam splitter 150 from the source of an energy beam 10 and the static reflector 120 is placed in the reflective path. In order to increase the length of the optical path and to provide shear-/tilt compensation, the path lengths are increased by a first retroreflector 130 in combination with a second static reflector 132 in relation to the inventive reflector 1 and optionally a second retroreflector 122 in the beam path of the static reflector 120. The first retroreflector 130 is positioned to receive a first reflection 117-1 from the reflector 1 adapted to oscillate and to reflect the received first reflection 117-1 antiparallel to the first reflection 117-1 onto the inventive reflector 1 adapted to oscillate for a second reflection 117-2. A second reflector 132 positioned to reflect the second reflection 117-2 back onto the inventive reflector 1 adapted to oscillate is provided for a third reflection 117-3, which follows the same optical path as the second reflection 117-2. The first retroreflector 130 is further provided to reflect the third reflection 117-3 onto the optical path of the first reflection 117-1 back onto the inventive reflector 1 adapted to oscillate for a fourth reflection 117-4.

The use of the first retroreflector 130 and the second reflector 132 increases the spectral resolution since the spectral resolution is inverse related to the optical path difference, which is increased by the first retroreflector 130 and the second reflector 132. Only an accurate adjustment of the second reflector 132 is necessary. The second reflector 132 needs to be adjusted such that the beams are antiparallel or on top of each other, respectively. The use of the first retroreflector 130 and the second reflector 132 provides compensation for tilt and shear, and allows a compensation of amplitude errors. In the embodiment of Fig. 4, the optical path difference and thus the spectral resolution is amplified by a factor of 4 in comparison to the setup in Fig. 3.

A reference energy source 160 can optionally be used to measure the position of the reflector 1 adapted to oscillate. Energy from the reference light source 160 passes a second beam splitter 162. One part of the energy of the reference energy source 160 passes the second beam splitter 162 and is directed onto the oscillating reflector 1, back to the second beam splitter 162 and onto a second detector 164. The second part of the energy of the reference energy source 160 is reflected inside the beam splitter 162 onto a mirrored surface 163 of the second beam splitter 162 and onto a second detector 164. The detector records an interference pattern of the corresponding reference light source being preferably a monochromatic light source like a laser.

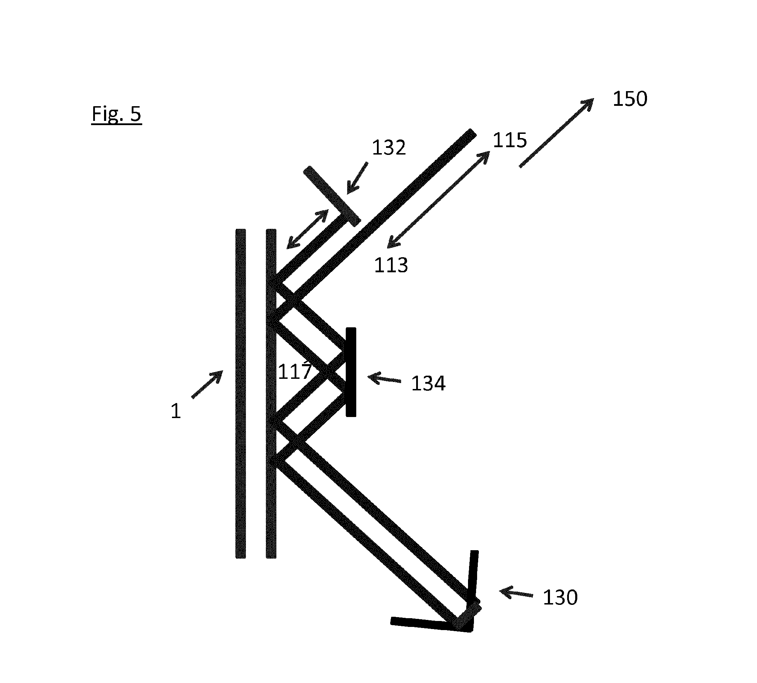

As shown in Fig. 5, in order to further increase the optical path length and to further increase the number of reflections on the inventive reflector 1, an at least one further third reflector 134 may be provided in the optical path between the first retroreflector 130 and the second reflector 132. Thus, the incident energy beam 113 is reflected on the inventive reflector 1 to the third reflector 134, back onto the inventive reflector 1, then to the retroreflector 130 back to the inventive reflector 1, onto the third reflector 134 and back again onto the inventive reflector 1, then onto the second reflector 132 and then back onto the inventive reflector 1 following the incident beam path onto the second reflector 132 until the energy beam is reflected from the inventive reflector 1 to the beam splitter 150. The use of the first retroreflector 130, the second reflector 132, and at least one third reflector 134 provides compensation for tilt and shear and allows a compensation of amplitude errors. In the embodiment of Fig. 5, the optical path difference and thus the spectral resolution is amplified by a factor of 8 in comparison to the setup in Fig. 3.

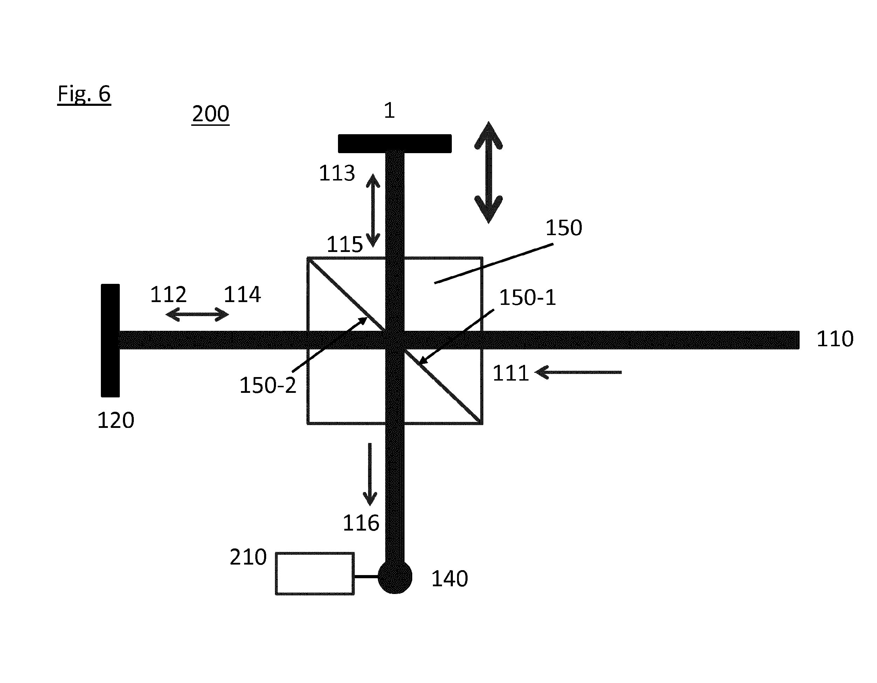

According to the invention, a Fourier transform spectrometer 200 according to Fig. 6 is provided comprising an interferometer 100 according to the invention and a means 210 for providing a Fourier transformation of the detected energy. The first reflector 120 may be a flat mirror or an object, the means for splitting 160 and the means for combining 170 are exemplarily both provided by a single beam splitter 150, the target 140 is a detector or detector array. In one embodiment, the source of a primary beam 111 in the Fourier transform spectrometer 200 may be an infrared light source or a polychromatic light source as described before with respect to Fig. 3. The means 210 for providing a Fourier transformation of the detected energy may be provided by a microprocessor and respective software. The Fourier transform spectrometer 200 of Fig. 6 is adapted to be in rapid scan mode according to the provision of the inventive reflector 1 adapted to oscillate. With an infrared light source as a source 110 of a primary beam 111, a Fourier Transform Infrared Spectrometer adapted for rapid scan mode is provided.

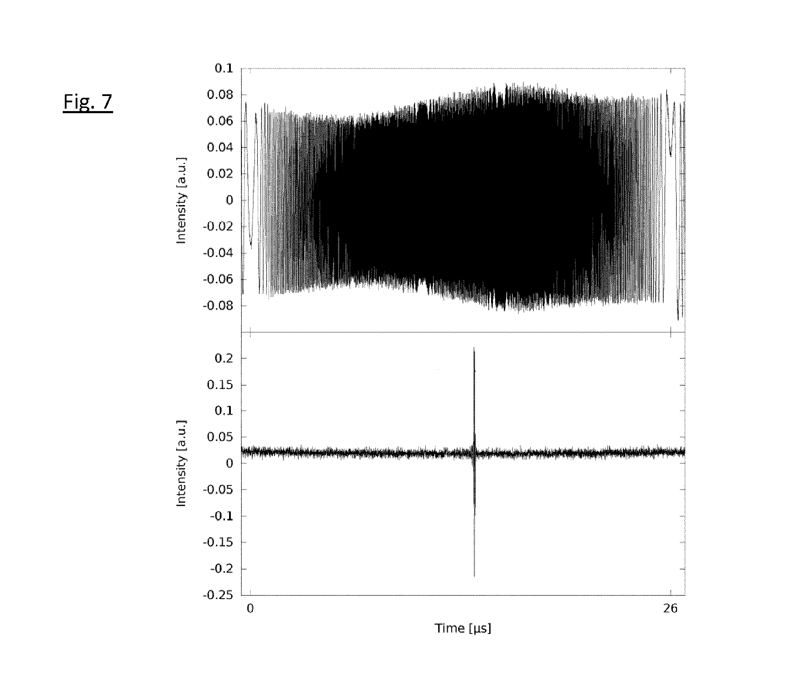

Fig. 7-9 show example measurements of a Fourier transform spectrometer according to the invention 200 with a setup of the interferometer as shown in Fig. 4.

Fig. 7 shows simultaneously measured interferograms of a monochromatic reference energy source 160 as shown in Fig. 4 (top of Fig. 7) and a polychromatic infrared primary energy source 110 (bottom of Fig. 7) in a rapid scan Fourier transform spectrometer. The reference energy source 160 is exemplarily a Helium-Neon laser. The reflector 1 adapted to oscillate is provided by a lapped surface of a titanium sonotrode oscillating at 19.3 kHz. The amplitude of oscillation of the sonotrode is 260 µm. The Helium-Neon laser interferogram in the top of Fig. 7 provides information about the position of the oscillating reflector 1. The distances covered between two zero crossings of the oscillating reflector 1 are equal. The frequency of the zero crossings in the interferogram in the top of Fig. 7 increases with increasing mirror velocity. Turning points of the oscillating reflector 1 can be seen at 0 µs and 26 µs. The maximum of the interferogram of the polychromatic primary energy source 110 in the bottom of Fig. 7 corresponds to the oscillating reflector position with all light frequencies in phase. A Fourier transformation of the recorded interferogram at equidistant points would lead to a spectrum of the primary energy source 110. The double sided interferogram as shown in Fig. 7 was recorded with a mirror retardation corresponding to 9 wavenumbers resolution of the resulting spectrum.

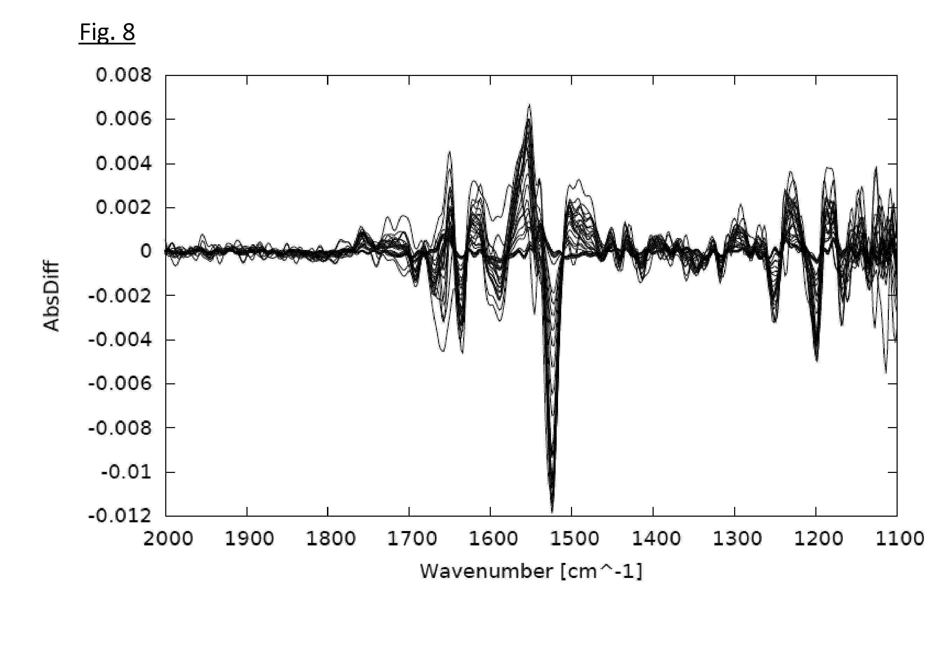

Fig. 8 shows an absorbance difference spectrum of the integral membrane protein bacteriorhodopsin (BR) before and after light excitation by an additionally and not shown excitation light source, here excitation by a 5 ns laser pulse of a frequency doubled Nd:Yag laser. The spectra are recorded every 26 µs with a spectral resolution of 12 wavenumbers. Exemplarily, 3000 spectra were averaged. The dominant band at 1526 wavenumbers in Fig. 8 corresponds to the C=C oscillation of the retinal.

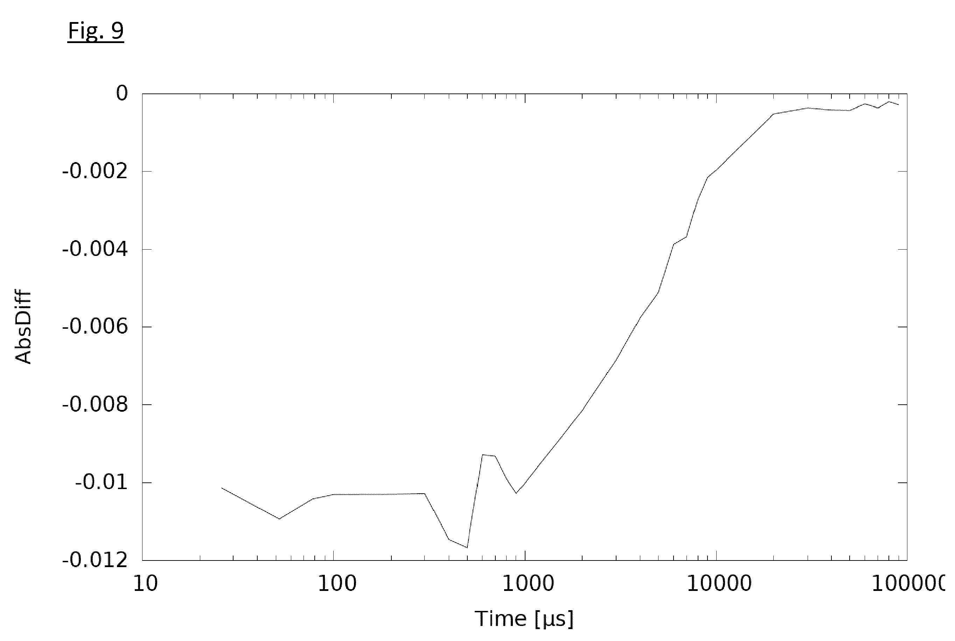

Fig. 9 shows the time course of the absorbance band changes at 1526 wavenumbers, corresponding to the C=C oscillation of the bacteriorhodopsin retinal, after light excitation. It shows the relaxation of the laser induced isomerization of the chromophore.

The principles, embodiments and modes of operation of the present invention laid out in the present application should be interpreted as illustrating the present invention and not as restricting it. Numerous variations and changes can be made to the foregoing illustrative embodiments without departing from the scope of the present invention.

### List of reference signs

- 1: reflector adapted to oscillate
- 10: a resonator
- 12: longitudinal direction of the resonator
- 14: reflecting layer
- 20: an energy beam reflecting surface
- 30: a means for inducing oscillations in the resonator
- 31: power supply unit
- 32: piezoelectric transducers
- 40: cooling device

- 100: Interferometer
- 110: primary energy source
- 111: primary energy beam
- 112: first energy beam
- 113: second energy beam
- 114: third energy beam
- 115: fourth energy beam
- 117-1: first reflection
- 117-2: second reflection
- 117-3: third reflection
- 117-4: fourth reflection
- 120: first reflector
- 122: second retroreflector
- 130: first retroreflector
- 132: second reflector
- 134: third reflector
- 140: detector
- 150: beam splitter
- 150-1: means for splitting an energy beam into two energy beams
- 150-2: means for combining energy beams to a single energy beam
- 160: reference energy source
- 162: second beam splitter
- 163: mirrored surface of second beam splitter
- 164: second detector

- 200: Fourier transform infrared spectrometer
- 210: means for providing a Fourier transformation of the detected energy

## Claims

1. A reflector (1) adapted to oscillate comprising:
a resonator (10),
an energy beam reflecting surface (20),
a means for inducing oscillations of the resonator (30),
**characterized in that**
the reflecting surface (20) is provided by a surface of the resonator (10).

2. The reflector (1) according to claim 1, wherein the reflecting surface (20) is an outer surface of the resonator (10) provided in longitudinal direction (12) of the resonator (10), wherein the resonator (10) is adapted to oscillate longitudinally.

3. The reflector (1) according to one of the previous claims, wherein the reflecting surface (20) is:
a lapped surface of the resonator (10), or
a surface of the resonator (10) provided with a reflecting layer (14) coated or evaporated thereon.

4. The reflector (1) according to one of the previous claims, wherein the reflecting surface (20) of the resonator (10) is of circular form.

5. The reflector (1) according to one of the previous claims, wherein the resonator (10) is of cylindrical shape having a length of half the wavelength of its resonance frequency.

6. The reflector (1) according to one of the previous claims, wherein the resonator (10) is an ultrasonic resonator, preferably a sonotrode.

7. The reflector (1) according to one of the previous claims, wherein a cooling device (40) is provided to cool the resonator (10).

8. Interferometer (100) comprising:
a source (110) of a primary energy beam (111),
a first reflector (120) being provided static such that a first path length from the source (110) to the first reflector (120) is constant,
a reflector (1) according to one of the previous claims provided to oscillate such that a second path length from the source (110) to the reflecting surface (20) is variable,
a target (140),
a means for splitting an energy beam (160) arranged such that it divides the primary beam (111) into a first energy beam (112) incident onto the first reflector (120), and a second energy beam (113) incident onto the reflector (1) adapted to oscillate, and
a means for combining energy beams (170) arranged such that it combines a third energy beam (114) reflected from the first reflector (120) and a fourth energy beam (115) reflected from the reflector (1) adapted to oscillate incident onto the target (140).

9. The interferometer (100) according to claim 8, wherein the reflector (1) is adapted to oscillate with respect to the direction of the second energy beam (113) incident thereon.

10. The interferometer (100) according to claims 8 or 9, further comprising
a first retroreflector (130) positioned to receive a first reflection (117-1) from the reflector (1) adapted to oscillate and to reflect the received first reflection (117-1) antiparallel to the first reflection (117-1) onto the reflector (1) adapted to oscillate for a second reflection (117-2), and
a second reflector (132) positioned to reflect the second reflection (117-2) back onto the reflector (1) adapted to oscillate for a third reflection (117-3) following the same optical path as the second reflection (117-2), wherein the first retroreflector (130) is further provided to reflect the third reflection (117-3) onto the optical path of the first reflection (117-1) back onto the reflector (1) adapted to oscillate for a fourth reflection (117-4).

11. The interferometer (100) according to claim 10, wherein at least one further third reflector (134) is provided in the optical path between the first retroreflector (130) and the second reflector (132).

12. Fourier transform spectrometer (200), comprising:
an interferometer (100) according to one of the previous claims 8 to 11 and
a means (210) for providing a Fourier transformation of the combined energy beams.

13. Fourier transform spectrometer (200) according to claim 12, wherein
the first reflector (120) is a flat mirror,
the means for splitting (160) and the means for combining (170) are both provided by a single beam splitter (150), and
the source (110) of a primary beam (111) is a monochromatic light source, preferably an infrared light source.

14. Fourier transform spectrometer (200) according to claim 12, wherein
the first reflector (120) is an object,
the means for splitting (160) and the means for combining (170) are both provided by a single beam splitter (150), and
the source (110) of a primary beam (111) is a polychromatic light source.
